# EUROPÄISCHE PATENTSCHRIFT

(11) **EP 4 019 791 B1**
(45) Veröffentlichungstag und Bekanntmachung des Hinweises auf die Patenterteilung: **24.07.2024**
(21) Anmeldenummer: 20217338.1
(22) Anmeldetag: 28.12.2020
(51) Int. Cl.: F16B 35/04, F16B 33/02, F16B 19/02, B60B 3/16

(54) **RADBEFESTIGUNGSVORRICHTUNG**
WHEEL FASTENING DEVICE
DISPOSITIF DE FIXATION DE ROUE

(43) Veröffentlichungstag der Anmeldung: 29.06.2022
(73) Patentinhaber: ABC Umformtechnik GmbH & Co. KG, 58285 Gevelsberg (DE)
(72) Erfinder: Koch, Dr. Daniel, 58285 Gevelsberg (DE); Lange, Andreas, 58285 Gevelsberg (DE); Teitscheid, Kevin, 58285 Gevelsberg (DE)
(74) Vertreter: Schneider, Sascha

(56) Entgegenhaltungen:
- EP-A2- 0 999 076
- EP-A2- 1 619 045
- DE-A1- 102010 040 753

## Beschreibung

Die vorliegende Erfindung betrifft eine Radbefestigungsvorrichtung sowie eine Verwendung einer Radbefestigungsvorrichtung gemäß den neben geordneten Patentansprüchen.

Radbefestigungsvorrichtungen verschiedener Art sind aus dem Stand der Technik bekannt. Solche Radbefestigungsvorrichtungen sind beim Betrieb von Kraftfahrzeugen wie Lastkraftwagen oder Personenkraftwagen hohen Belastungen ausgesetzt, wobei das Lösen der Befestigung oder gar das Brechen der Radbefestigungsvorrichtungen aus Sicherheitsgründen unbedingt verhindert werden muss.

Zusätzlich entstehen durch den Wandel in der Automobilindustrie noch höhere Belastungen dadurch, dass SUV oder Elektrofahrzeuge höhere Gewichte aufweisen und dadurch höhere Antriebsmomente erfordern, die insbesondere zu Dauerbrüchen an den Radbefestigungsvorrichtungen führen können. Insbesondere besteht der erhöhte Bedarf an Radbefestigungsvorrichtungen, die hohe Schwingfestigkeiten aufweisen.

Im Stand der Technik sind beispielsweise aus der Gebrauchsmusterschrift DE8714334 U1 so genannte Dehnschrauben (im Folgenden auch Dehnschaftschrauben genannt) bekannt. Dehnschaftschrauben sind dazu bestimmt, mit großer Vorspannkraft angezogen zu werden; um bei den miteinander verschraubten Teilen, z.B. den Lagerteilen von Pleuelstangen, unter Betriebsbeanspruchung ein wesentliches Aufklaffen der Teilfugen zu vermeiden. Zur Erzielung der gewünscht großen Vorspannkraft werden solche Dehnschaftschrauben über ihren elastischen Grenzbereich in den plastischen Bereich hinein verformt. Dazu erfolgt das Anziehen der Dehnschaftschrauben drehwinkel- oder streckgrenzgesteuert. Bei Pleuelschrauben sind besonders hohe Vorspannkräfte deswegen erwünscht, weil eine exzentrische Betriebsbeanspruchung der Schrauben vorliegt. Es ist bekannt, Dehnschaftschrauben dadurch herzustellen, dass der Schaftdurchmesser zerspanend auf bis zu ca. 90% des Kerndurchmessers des Befestigungsgewindes reduziert wird. Dieser reduzierte Schaftdurchmesser führt nachteilig zu einer reduzierten maximalen statischen Festigkeit.

Der relativ lange Übergangsbereich vom Gewinde zum Dehnschaft sowie der geringe Durchmesser des Dehnschaftes führen jedoch dazu, dass Dehnschaftschrauben bei Radbefestigungsvorrichtungen nicht verwendbar sind. Außerdem müssen Dehnschaftschrauben nach der Demontage durch neue Teile ausgetauscht werden, da eine Wiederverwendbarkeit aufgrund der plastischen Verformung nicht möglich ist. Hier wird eine überelastische Montage durchgeführt, wobei die Streckengrenze zu 100 % ausgenutzt wird. Radbefestigungsvorrichtung hingegen müssen erneut montiert werden können, um zum Beispiel einen Radwechsel zu ermöglichen. Somit sind Dehnschaftschrauben für Radbefestigungen ungeeignet.

Bei Radbefestigungsvorrichtungen sind aus der Druckschrift WO/2007/138061 Radschrauben mit einem in Richtung ihrer Längsachse verlaufenden Hohlraum bekannt, um die Schwingfestigkeit einer dynamisch belasteten Verbindung durch Reduzierung der Axialsteifigkeit zu verbessern und gleichzeitig die ungefederten Massen des Fahrwerks über die reduzierte Masse der Radbefestigungsvorrichtung zu reduzieren. Allerdings bieten auch diese Radschrauben nicht die erforderlichen statischen und dynamischen Festigkeiten, die infolge der gestiegenen Belastungen erforderlich sind.

Aus der EP 1 619 045 A2 ist ein Radbolzen zur Befestigung von Fahrzeugrädern bekannt.

Aufgabe der vorliegenden Erfindung ist es daher, die Nachteile des Stands der Technik zu beseitigen und insbesondere die Festigkeit, insbesondere die Schwingfestigkeit, der Radbefestigungsvorrichtung bei hoher dynamischer Belastung zu verbessern.

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei in der Beschreibung, den Ansprüchen und/oder den Figuren offenbarten Merkmalen. Bei angegebenen Wertebereichen sollen auch innerhalb der genannten Grenzen liegende Werte als Grenzwerte offenbart gelten und in beliebiger Kombination beanspruchbar sein.

Erfindungsgemäß vorgesehen ist eine Radbefestigungsvorrichtung zur Befestigung eines Fahrzeugrades an einem Radlager, einem Radlagerflansch und/oder einer Bremsscheibe eines Kraftfahrzeugs, aufweisend ein Befestigungsgewinde zur Befestigung im Radlager, im Radlagerflansch und/oder in der Bremsscheibe, wobei die Radbefestigungsvorrichtung einen Stützbereich zur Abstützung in der Bremsscheibe oder im Fahrzeugrad aufweist, wobei zwischen dem Stützbereich und dem Befestigungsgewinde eine Einkerbung angeordnet ist. Dadurch ist es erfindungsgemäß vorteilhaft möglich, die Festigkeit, insbesondere die Schwingfestigkeit, der Radbefestigungsvorrichtung bei hoher dynamischer Belastung zu verbessern. Im Vergleich zu Dehnschaftschrauben ist es vorteilhaft möglich, weniger als 100% der maximalen Streckgrenze der Radbefestigungsvorrichtung zu benutzen, sodass die Wiederverwendbarkeit der Radbefestigungsvorrichtung dauerhaft gewährleistet wird, da die Radbefestigungsvorrichtung nicht plastisch verformt wird.

Vorteilhaft wird die Radbefestigungsvorrichtung in ihrer axialen statischen Festigkeit nicht bzw. nicht nennenswert reduziert. Es erfolgt nur die Reduktion der Kerbspannung im Übergang zwischen Befestigungs- und Mutterngewinde. Die Belastungen (Kräfte/Klemmende Kräfte) in der Radbefestigungsvorrichtung sind mit einer Vollgewindeschraube vergleichbar.

Im weiteren Text werden folgende Festlegungen in Bezug auf das Befestigungsgewinde getroffen: der Nenndurchmesser wird mit d₁ bezeichnet, der Flankendurchmesser mit d₂ und der Kerndurchmesser mit d₃. Im Übrigen gelten die dem Fachmann bekannten Definitionen der einschlägigen Normen, zum Beispiel DIN 13.

Vorteilhaft ist ein kurzer Übergangsbereich vom Befestigungsgewinde zur Einkerbung möglich, wenn der Durchmesser D der Einkerbung in etwa dem Kerndurchmesser da des Befestigungsgewindes entspricht. Die Einkerbung sorgt für maximale Schwingfestigkeitssteigerung ohne nennenswerte Einschränkungen in der maximal erreichbaren Vorspannkraft. Somit besteht ein optimaler Kompromiss aus Kerbspannungsreduktion und maximaler Vorspannkraft.

Durch den Stützbereich kann eine Verschiebung der Radbefestigungsvorrichtung senkrecht zur Längsachse wirksam vermindert werden. Dieses verbessert die Betriebssicherheit, da unerwünschte Belastungen verhindert beziehungsweise zumindest verringert werden können. Der Stützbereich kann hierzu einen Durchmesser aufweisen, der zumindest ungefähr gleich oder auch identisch ist mit dem Nenndurchmesser d₁ des Befestigungsgewindes. Alternativ kann der Stützbereich einen Durchmesser aufweisen, der größer ist als der Nenndurchmesser d₁ des Befestigungsgewindes.

Durch den Stützbereich wird vorteilhaft eine Verschiebung der befestigten Radkomponenten (Rad, Bremsscheibe) im Betrieb soweit reduziert, dass eine beschädigungsfreie Demontage der Radbefestigungsvorrichtung gewährleistet wird.

Bei andersartiger Ausführung der Radbefestigungsvorrichtung im Stand der Technik ohne Stützbereich wie bspw. einer Dehnschaftschraube oder einer mit Gewinde ausschließlich im Bereich des Muttergewindes ausgeführten Vollschraube besteht die Gefahr der Gewindebeschädigung bei Demontage der Radbefestigungsvorrichtung. Durch solche Gewindebeschädigungen könnte nachteilig bei erneuter Verwendung eine zu geringe klemmende Kraft erzeugt werden, da die beschädigten Gewinde der Radbefestigungsvorrichtung einen größeren Einschraubwiderstand gegenüber einer unbeschädigten Radbefestigungsvorrichtung darstellen. Zudem könnte das Schraubengewinde bei der Demontage mit einer ggf. verschobenen Bremsscheibe kollidieren und beschädigt werden und somit eine Wiederverwendbarkeit der Schraube nicht gewährleistet werden.

Bevorzugt ist der Radius an der Einkerbung kleiner als oder gleich die Hälfte des Nenndurchmessers d₁ des Befestigungsgewindes, also r ≤ 0,5 * dt.

Bei der Radbefestigungsvorrichtung kann es sich um eine Radschraube oder um einen Stehbolzen handeln. Die Einkerbung ist eine konkave Ausnehmung in der Radbefestigungsvorrichtung.

Bevorzugt wird die Einkerbung durch einen Umformprozess hergestellt, wodurch vorteilhaft Mikrokerben vermieden werden können, welche durch mechanische Bearbeitung entstehen würden.

Bevorzugt ist die Einkerbung in einem Übergangsbereich vom Befestigungsgewinde zum Stützbereich angeordnet, wobei weiter bevorzugt die Einkerbung unmittelbar an das Befestigungsgewinde anschließt und sich der Stützbereich unmittelbar an die Einkerbung anschließt.

Bevorzugt wird die Radbefestigungsvorrichtung derart montiert beziehungsweise ist die Radbefestigungsvorrichtung derart montierbar, dass die Einkerbung mittig im Übergangsbereich vom Radlager zur Bremsscheibe angeordnet ist beziehungsweise anordenbar ist. Besonders bevorzugt ist es, wenn durch die Einkerbung die in einer Zugrichtung liegenden ersten Gewindegänge des Mutterngewindes des Radlagers ausgespart sind beziehungsweise aussparbar sind. Die Position der Einkerbung ist insbesondere abhängig von Mutterngewinde des Radlagers und kann variieren beziehungsweise ist variabel.

Erfindungsgemäß ist vorgesehen, dass die Einkerbung zumindest bereichsweise rund ausgebildet ist. Hierdurch kann vorteilhaft eine gute Kerbspannungsminimierung erfolgen. In einer anderen bevorzugten Ausführungsform ist vorgesehen, dass die Einkerbung umlaufend ausgebildet ist. Besonders bevorzugt ist die Einkerbung zumindest bereichsweise rund und umlaufend vorgesehen, wodurch eine besonders gute Kerbspannungsminimierung erfolgen kann.

Die Tiefe der Einkerbung, die Rundung der Einkerbung und die Breite der Einkerbung sind insbesondere abhängig von den Abmessungen der Radbefestigungsvorrichtung (insbesondere Gewindegröße und Gewindesteigung) und können je nach Anwendungsfall variieren.

In einer anderen bevorzugten Ausführungsform ist vorgesehen, dass der geringste Durchmesser D der Einkerbung größer ist als das 0,9-fache, bevorzugt größer als das 0,95-fache, des Kerndurchmessers d₃ des Befestigungsgewindes.

In Bezug auf die Tiefe der Einkerbung, also die Ausdehnung der Einkerbung senkrecht zur Längsachse beziehungsweise Symmetrieachse der Radbefestigungsvorrichtung, ist der kleinste Durchmesser D der Einkerbung kleiner als der Flankendurchmesser d₂ des Befestigungsgewindes aber größer als das 0,9-fache, bevorzugt das 0,95-fache, des Kerndurchmessers d₃ des Befestigungsgewindes. In einer Formel ausgedrückt: d₂ > D >0,9 * d₃ bevorzugt d₂ > D >0,95 * da. Im Vergleich zur Dehnschaftschraube kann dadurch eine wesentliche größere Klemmkraft erreicht werden, insbesondere kann fast die maximale Klemmkraft wie bei einer Vollgewindeschraube erreicht werden.

Erfindungsgemäß ist vorgesehen, dass die Breite der Einkerbung, also die Ausdehnung der Einkerbung in Richtung der Längsachse beziehungsweise Symmetrieachse der Radbefestigungsvorrichtung im Bereich vom 2-10-fachen der Gewindesteigung P des Befestigungsgewindes liegt. In einer Formel ausgedrückt: 2 * P < B < 10 * P.

In einer anderen bevorzugten Ausführungsform ist vorgesehen, dass der Stützbereich als Gewinde ausgebildet ist, insbesondere identisch zum Befestigungsgewinde. Vorteilhaft kann bei einer fehlerhaften Bauteilverwendung am Radverbund das Gewinde im Stützbereich zusätzlich in ein Muttergewinde greifen ohne Beschädigungen zu erzeugen. Falls die Radbefestigungsvorrichtung z.B. aufgrund eines geänderten Raddesigns zu weit bzw. zu tief eingeschraubt wird, sorgt die Radbefestigungsvorrichtung trotzdem weiterhin für ausreichend Halt am Gewinde im Stützbereich.

In einer anderen bevorzugten Ausführungsform ist vorgesehen, dass der Stützbereich mehrere umlaufende ringförmige Erhebungen aufweist, wobei die Erhebungen insbesondere voneinander beanstandet sind. Insbesondere sind die umlaufenden ringförmigen Erhebungen gewindeartig ausgebildet.

In einer anderen bevorzugten Ausführungsform ist vorgesehen, dass der Stützbereich mehrere parallel zur Längsachse der Radbefestigungsvorrichtung verlaufende Erhebungen aufweist, wobei die Erhebungen insbesondere voneinander beanstandet sind.

Ein anderer Gegenstand der Erfindung betrifft gemäß Anspruch 7 eine Verwendung einer Radbefestigungsvorrichtung gemäß einer der vorhergehenden Ausführungsformen zur Befestigung eines Fahrzeugrades an einem Radlager und/oder einer Bremsscheibe. Für die Verwendung gilt das oben zur Radbefestigungsvorrichtung Ausgeführte entsprechend.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: schematisch eine erfindungsgemäße Radbefestigungsvorrichtung in einer ersten Ausführungsform als Radschraube in einer Seitenansicht,
- Figur 2: schematisch eine erfindungsgemäße Radbefestigungsvorrichtung in der Variante einer Radschraube in einer Einbausituation,
- Figur 3: schematisch eine erfindungsgemäße Radbefestigungsvorrichtung in einer zweiten Ausführungsform als Stehbolzen in einer Seitenansicht,
- Figur 4: schematisch eine erfindungsgemäße Radbefestigungsvorrichtung in einer dritten Ausführungsform in einer Seitenansicht,
- Figur 5: schematisch eine erfindungsgemäße Radbefestigungsvorrichtung in einer vierten Ausführungsform in einer Seitenansicht und
- Figur 6: schematisch eine erfindungsgemäße Radbefestigungsvorrichtung in einer fünften Ausführungsform in einer Seitenansicht.

In den Figuren sind gleiche Elemente und Elemente mit den gleichen Funktionen mit den gleichen Bezugszeichen gekennzeichnet.

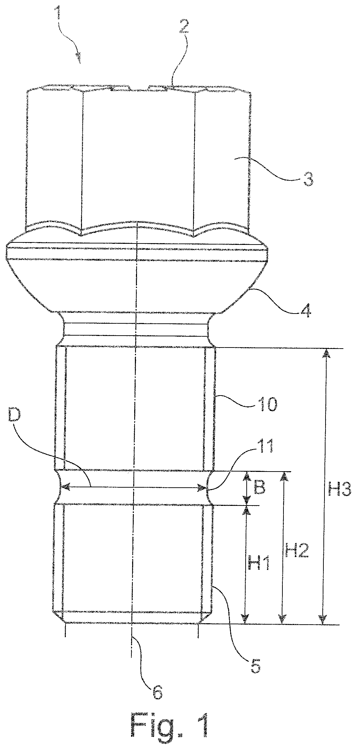

Figur 1 zeigt schematisch eine erfindungsgemäße Radbefestigungsvorrichtung 1 in einer ersten Ausführungsform als Radschraube 1 in einer Seitenansicht. Die Radschraube 1 weist an ihrem einen Ende einen Schraubenkopf 2 auf, an dem ein Kraftangriff 3 für ein Werkzeug angeordnet ist. Im dargestellten Ausführungsbeispiel weist der Schraubenkopf 2 eine gekrümmt ausgebildete Schraubenkopfauflage 4 auf, die mit einer entsprechend angepasst ausgebildeten Andruckfläche in einer anzuziehenden Felge zusammenwirkt. Es liegt ebenfalls im Rahmen der Erfindung, an Stelle einer gekrümmt ausgebildeten Schraubenkopfauflage 4 eine konisch ausgebildete Schraubenkopfauflage vorzusehen. Alternativ ist es möglich, an Stelle der vorstehend genannten Formen der Schraubenkopfauflage 4 eine ebene senkrecht zu einer Längs- und Symmetrieachse 6 der Radschraube 1 verlaufende Schraubenkopfauflage vorzusehen.

Der Kraftangriff 3 ist im dargestellten Ausführungsbeispiel als Außensechskant ausgebildet. Der Kraftangriff 3 kann aber auch jede andere mögliche Ausführungsform aufweisen, und zwar in Anpassung an das jeweils verwendete Drehwerkzeug. Somit ist es insbesondere möglich, den Kraftangriff 3 als Innenkraftangriff auszubilden.

Die Radschraube 1 weist an ihrem anderen Ende ein Befestigungsgewinde 5 auf, das als Außengewinde ausgebildet ist. Die Radschraube 1 mit ihrem Schraubenkopf 2 und dem Befestigungsgewinde 5 ist einteilig ausgebildet.

Das Befestigungsgewinde 5 mit einem Nenndurchmesser d₁ weist einen Kerndurchmesser d₃ sowie einen Flankendurchmesser d₂ auf. Diese Definitionen sind dem Fachmann aus den einschlägigen Normen bekannt, zum Beispiel DIN 13.

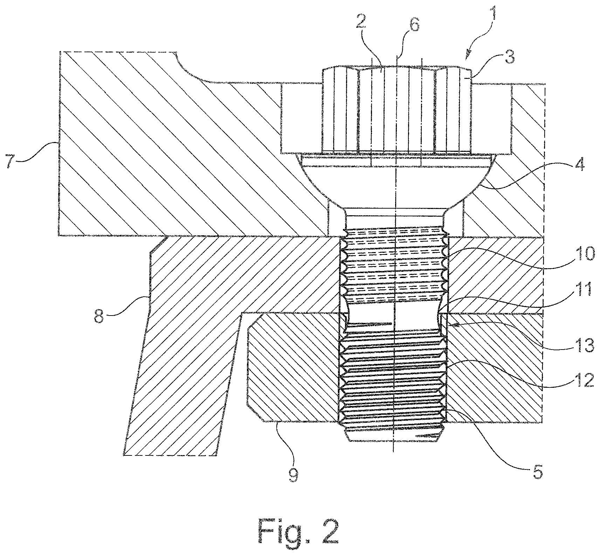

Figur 2 zeigt schematisch die erfindungsgemäße Radschraube 1 in einer beispielhaften Einbausituation. Die Radschraube 1 ist mit ihrem Befestigungsgewinde 5 in ein Einschraubgewinde 12 eines Radlagers 9 beziehungsweise eines Radlagerflansches geschraubt und befestigt. Die Radschraube 1 befestigt ein Fahrzeugrad 7 und eine Bremsscheibe 8 am Radlager 9. Die Schraubenkopfauflage 4 übt hierzu eine Kraft auf das Rad 7 aus, so dass das Rad 7, das Radlager 9 und die Bremsscheibe 8 miteinander verspannt werden.

Erfindungsgemäß weist die Radbefestigungsvorrichtung 1 einen Stützbereich 10 zur Abstützung in der Bremsscheibe 8, wobei zwischen dem Stützbereich 10 und dem Befestigungsgewinde 5 eine Einkerbung 11 angeordnet ist. In dieser beispielhaften Einbausituation befindet sich die Einkerbung 11 auf Höhe des ersten tragenden Gewindegangs 13 des Einschraubgewindes 12.

In dieser beispielhaften Ausführungsformform ist die Einkerbung 11 rund ausgebildet und der Durchmesser D der Radschraube 1 im Bereich der Einkerbung 11 ist geringer als der Flankendurchmesser d₂ des Befestigungsgewindes 5.

In Bezug auf die Tiefe der Einkerbung 11, also die Ausdehnung der Einkerbung 11 senkrecht zur Längsachse beziehungsweise Symmetrieachse 6 der Radschraube 1, ist der kleinste Durchmesser D der Einkerbung 11 kleiner als der Flankendurchmesser d₂ des Befestigungsgewindes 5 aber größer als das 0,9-fache des Kerndurchmessers da des Befestigungsgewindes 5. In einer Formel ausgedrückt: d₂ > D >0,9 * da

In Bezug auf die Breite B der Einkerbung 11, also die Ausdehnung der Einkerbung 11 in Richtung der Längsachse beziehungsweise Symmetrieachse 6 der Radschraube 1, liegt die Breite B der Einkerbung 11 im Bereich vom 2-10-fachen der Gewindesteigung P des Befestigungsgewindes 5. In einer Formel ausgedrückt: 2 * P < B ≤ 10 * P.

Die Höhe H1 (sogenannte tragende Gewindelänge) bezeichnet in der Figur 1 die Erstreckung des Befestigungsgewindes 5 in Richtung der Längsachse beziehungsweise Symmetrieachse 6, die Höhe H2 bezeichnet die Länge vom Beginn des Befestigungsgewindes 5 bis zum Ende der Einkerbung 11 bzw. bis zum Beginn des Stützbereichs 10 und die Höhe H3 bezeichnet die Länge vom Beginn des Befestigungsgewindes 5 bis zum Ende des Stützbereichs 10. Die Breite B der Einkerbung 11 ergibt sich somit aus H2 minus H1.

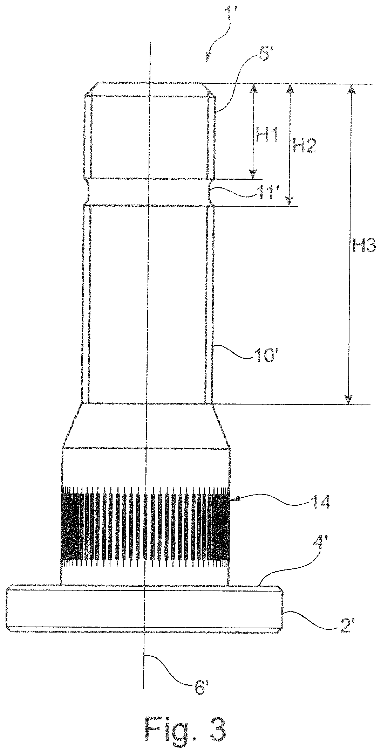

Die Figur 3 zeigt eine beispielhafte erfindungsgemäße Radbefestigungsvorrichtung 1', die in dieser Variante als Stehbolzen 1' ausgeführt ist. Im Prinzip gilt das oben für die Radschraube 1 beziehungsweise die Einbausituation der Figur 2 Entsprechende. Im Unterschied zur Radschraube 1 weist der Stehbolzen 1' einen Bolzenkopf 2' ohne Kraftangriff auf, sowie eine senkrecht zur Symmetrieachse 6' angeordnete Bolzenkopfauflage 4'. Zudem weist der Stehbolzen 1' eine Rändelung 14 zum Einpressen auf. Analog zur Radschraube 1 weist der Stehbolzen 1' einen Stützbereich 10', eine Einkerbung 11' sowie ein Befestigungsgewinde 5' auf.

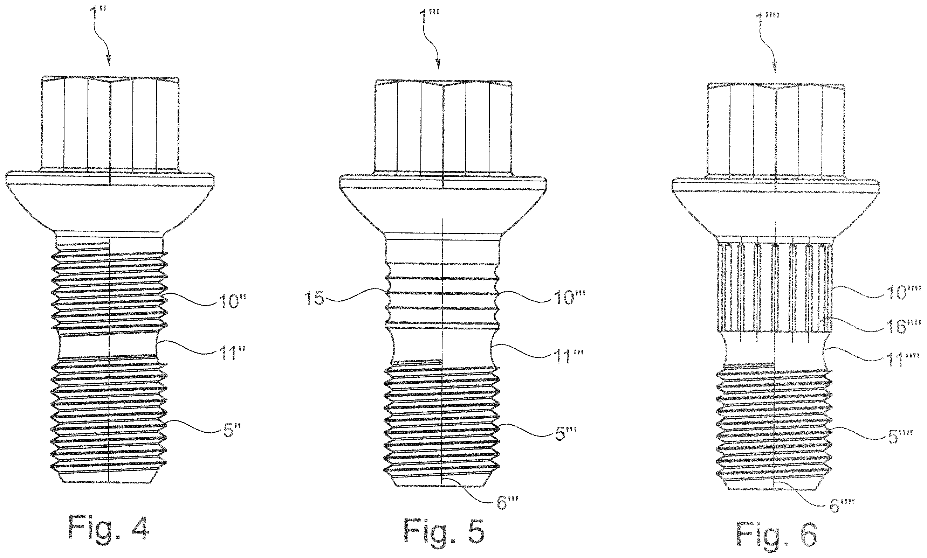

Figur 4 zeigt eine erfindungsgemäße Radschraube 1" gemäß einer weiteren Variante der vorliegenden Erfindung. Die Radschraube 1" weist ein Befestigungsgewinde 5" auf, sowie eine Einkerbung 11". Hierzu wird auf die obigen Ausführungen verwiesen.

In dieser Variante ist ein Stützbereich 10" identisch zum Befestigungsgewinde 5" ausgebildet und ist als Fortführung des Befestigungsgewindes 5" ausgebildet. Der Nenndurchmesser des Gewindes im Stützbereich 10" entspricht dem Nenndurchmesser d₁ des Befestigungsgewindes 5". Insbesondere ist hierdurch eine besonders einfache Fertigung des Stützbereichs 10" möglich. Der Stützbereich 10" dient zur Abstützung der Radschraube 1" in der Bremsscheibe 8 (nicht dargestellt, siehe Figur 2).

Figur 5 zeigt eine erfindungsgemäße Radschraube 1‴ gemäß einer weiteren Variante der vorliegenden Erfindung. Die Radschraube 1‴ weist ein Befestigungsgewinde 5‴ auf, sowie eine Einkerbung 11‴. Hierzu wird auf die obigen Ausführungen verwiesen.

In dieser Variante ist ein Stützbereich 10‴ derart ausgebildet, dass der Stützbereich 10‴ mehrere umlaufende ringförmige Erhebungen 15 aufweist, die in bestimmten Abständen zueinander angeordnet sind. Die Erhebungen 15 sind jeweils rotationssymmetrisch zur Symmetrieachse 6‴ angeordnet.

Figur 6 zeigt eine erfindungsgemäße Radschraube 1ʺʺ gemäß einer weiteren Variante der vorliegenden Erfindung. Die Radschraube 1ʺʺ weist ein Befestigungsgewinde 5ʺʺ auf, sowie eine Einkerbung 11ʺʺ. Hierzu wird auf die obigen Ausführungen verwiesen.

In dieser Variante ist ein Stützbereich 10ʺʺ derart ausgebildet, dass der Stützbereich 10ʺʺ mehrere parallel zur Symmetrieachse 6ʺʺ verlaufende Erhebungen 16 aufweist, die in bestimmten Abständen zueinander angeordnet sind.

Die obigen Ausführungsformen dienen lediglich der illustrativen Erläuterung der Erfindung und sind keinesfalls dafür gedacht, die vorliegende Erfindung in irgendeiner Weise einzuschränken.

### Bezugszeichenliste

- 1,1'11ʺ,1‴,1ʺʺ: Radbefestigungsvorrichtung
- 2,2': Kopf
- 3: Kraftangriff
- 4,4': Kopfauflage
- 5,5',5ʺ,5‴,5ʺʺ: Befestigungsgewinde
- 6,6',6ʺ,6ʺʺ: Längs-/Symmetrieachse
- 7: Fahrzeugrad
- 8: Bremsscheibe
- 9: Radlager
- 10,10',10ʺ,10‴,10ʺʺ: Stützbereich
- 11,11',11",11,11ʺʺ: Einkerbung
- 12: Einschraubgewinde
- 13: tragender Gewindegang
- 14: Rändelung
- 15,16: Erhebungen
- B: Breite
- D: kleinster Durchmesser der Einkerbung
- H1,H2,H3: Längen

## Patentansprüche

1. Radbefestigungsvorrichtung (1,1'1ʺ,1‴,1ʺʺ) zur Befestigung eines Fahrzeugrades (7) an einem Radlager (9), einem Radlagerflansch und/oder einer Bremsscheibe (8) eines Kraftfahrzeugs, aufweisend ein Befestigungsgewinde (5,5',5ʺ,5‴,5ʺʺ) zur Befestigung im Radlager (9), im Radlagerflansch und/oder in der Bremsscheibe, **dadurch gekennzeichnet, dass** die Radbefestigungsvorrichtung (1,1'1ʺ,1‴,1ʺʺ) einen Stützbereich (10,10',10",10"',10"") zur Abstützung in der Bremsscheibe (8) und/oder dem Fahrzeugrad (7) aufweist, wobei zwischen dem Stützbereich (10,10',10ʺ,10‴,10ʺʺ) und dem Befestigungsgewinde (5,5',5ʺ,5‴,5ʺʺ) eine Einkerbung (11,11',11ʺ,11‴,11ʺ) angeordnet ist, **dadurch gekennzeichnet, dass** die Einkerbung (11,11',11ʺ,11‴,11ʺʺ) zumindest bereichsweise rund ausgebildet ist, wobei die Breite (B) der Einkerbung (11,11',11,11,11ʺʺ) im Bereich vom 2 bis 10-fachen der Gewindesteigung (P) des Befestigungsgewindes (5,5',5ʺ,5‴,5ʺʺ) liegt.

2. Radbefestigungsvorrichtung (1,1'1ʺ,1‴,1ʺʺ) nach Anspruch 1, wobei die Einkerbung (11,11',11ʺ,11‴,11ʺʺ) umlaufend ausgebildet ist.

3. Radbefestigungsvorrichtung (1,1'1ʺ,1‴,1ʺʺ) nach mindestens einem der vorhergehenden Ansprüche, wobei der geringste Durchmesser (D) der Einkerbung (11,11',11ʺ,11‴,11ʺʺ) größer ist als das 0,9-fache des Kerndurchmessers (d₃) des Befestigungsgewindes (5,5',5ʺ,5‴,5ʺʺ).

4. Radbefestigungsvorrichtung (1,1'1ʺ,1‴,1ʺʺ) nach mindestens einem der vorhergehenden Ansprüche, wobei der Stützbereich (10,10',10ʺ,10‴,10ʺʺ) als Gewinde ausgebildet ist, insbesondere identisch zum Befestigungsgewinde (5,5',5ʺ,5‴,5ʺʺ).

5. Radbefestigungsvorrichtung (1,1'1ʺ,1‴,1ʺʺ) nach mindestens einem der vorhergehenden Ansprüche, wobei der Stützbereich (10,10',10ʺ,10‴,10ʺʺ) mehrere umlaufende ringförmige Erhebungen (15) aufweist.

6. Radbefestigungsvorrichtung (1,1'1ʺ,1‴,1ʺʺ) nach mindestens einem der vorhergehenden Ansprüche, wobei der Stützbereich (10,10',10ʺ,10‴,10ʺʺ) mehrere parallel zur Längsachse (6"") der Radbefestigungsvorrichtung (1,1'1ʺ,1‴,1ʺʺ) verlaufende Erhebungen (16) aufweist.

7. Verwendung einer Radbefestigungsvorrichtung (1,1'1ʺ,1‴,1ʺʺ) gemäß mindestens einem der vorhergehenden Ansprüche zur Befestigung eines Fahrzeugrades (7) an einem Radlager (9) und/oder einer Bremsscheibe (8).

## Claims

1. Wheel fastening device (1,1'1ʺ,1‴,1ʺʺ) for fastening a vehicle wheel (7) to a wheel bearing (9), a wheel bearing flange and/or a brake disc (8) of a motor vehicle, having a fastening thread (5,5',5ʺ,5‴,5ʺʺ) for fastening in the wheel bearing (9), in the wheel bearing flange and/or in the brake disc, **characterized in that** the wheel fastening device (1,1'1ʺ,1‴,1ʺʺ) has a support region (10,10',10ʺ,10‴,10ʺʺ) for support in the brake disc (8) and/or the vehicle wheel (7), wherein a notch (11,11',11ʺ,11‴,11ʺʺ) is arranged between the support region (10,10',10ʺ,10‴,10ʺʺ) and the fastening thread (5,5',5ʺ,5‴,5ʺʺ), **characterized in that** the notch (11,11',11ʺ,11‴,11ʺʺ) is round at least in areas, wherein the width (B) of the notch (11,11',11ʺ,11‴,11ʺʺ) is in the range of 2 to 10 times the thread pitch (P) of the fastening thread (5,5',5ʺ,5‴,5ʺʺ).

2. Wheel fastening device (1,1'1ʺ,1‴,1ʺʺ) according to Claim 1, wherein the notch (11,11',11ʺ,11‴,11ʺʺ) is circumferential.

3. Wheel fastening device (1,1'1ʺ,1‴,1ʺʺ) according to at least one of the preceding claims, wherein the smallest diameter (D) of the notch (11,11',11ʺ,11‴,11ʺʺ) is greater than 0.9 times the core diameter (d₃) of the fastening thread (5,5',5ʺ,5‴,5ʺʺ).

4. Wheel fastening device (1,1'1",1"',1"") according to at least one of the preceding claims, wherein the support region (10,10',10ʺ,10‴,10ʺʺ) is formed as a thread, in particular identical to the fastening thread (5,5',5ʺ,5‴,5ʺʺ).

5. Wheel fastening device (1,1'1ʺ,1‴,1ʺʺ) according to at least one of the preceding claims, wherein the support region (10,10',10ʺ,10‴,10ʺʺ) has several circumferential annular elevations (15).

6. Wheel fastening device (1,1'1ʺ,1‴,1ʺʺ) according to at least one of the preceding claims, wherein the support region (10,10',10ʺ,10‴,10ʺʺ) has several elevations (16) running parallel to the longitudinal axis (6ʺʺ) of the wheel fastening device (1,1',1ʺ,1‴,1ʺʺ).

7. Use of a wheel fastening device (1,1'1ʺ,1‴,1ʺʺ) according to at least one of the preceding claims for fastening a vehicle wheel (7) to a wheel flange (9) and/or a brake disc (8).

## Revendications

1. Dispositif de fixation de roue (1, 1', 1ʺ, 1‴, 1ʺʺ) pour la fixation d'une roue de véhicule (7) à un roulement de roue (9), une bride de roulement de roue et/ou un disque de frein (8) d'un véhicule automobile, présentant un filet de fixation (5, 5', 5ʺ, 5‴, 5ʺʺ) pour fixation dans le roulement de roue (9), dans la bride de roulement de roue et/ou dans le disque de frein, **caractérisé en ce que** le dispositif de fixation de roue (1, 1', 1ʺ, 1‴, 1ʺʺ) présente une zone d'appui (10, 10', 10ʺ, 10‴, 10ʺʺ) pour appui dans le disque de frein (8) et/ou la roue de véhicule (7), une indentation (11, 11', 11ʺ, 11‴, 11ʺʺ) étant disposée entre la zone d'appui (10, 10', 10", 10‴, 10"") et le filet de fixation (5, 5', 5", 5‴, 5ʺʺ), **caractérisé en ce que** l'indentation (11, 11', 11ʺ, 11‴, 11ʺʺ) a une conformation ronde du moins par endroits, la largeur (B) de l'indentation (11, 11', 11", 11'", 11ʺʺ) représentant 2 à 10 fois le pas de filet (P) du filet de fixation (5, 5', 5ʺ, 5, 5ʺʺ).

2. Dispositif de fixation de roue (1, 1', 1", 1‴, 1ʺʺ) selon la revendication 1, dans lequel l'indentation (11, 11', 11ʺ, 11‴, 11ʺʺ) a une conformation périphérique.

3. Dispositif de fixation de roue (1, 1', 1", 1‴, 1ʺʺ) selon au moins une des revendications précédentes, dans lequel le diamètre le plus faible (D) de l'indentation (11, 11', 11ʺ, 11‴, 11ʺʺ) est supérieur à 0,9 fois le diamètre de noyau (d3) du filet de fixation (5, 5', 5", 5‴, 5ʺʺ).

4. Dispositif de fixation de roue (1, 1', 1", 1‴, 1ʺʺ) selon au moins une des revendications précédentes, dans lequel la zone d'appui (10, 10', 10", 10‴, 10ʺʺ) est réalisée sous forme d'un filet, en particulier identique au filet de fixation (5, 5', 5", 5‴, 5ʺʺ).

5. Dispositif de fixation de roue (1, 1', 1ʺ, 1‴, 1ʺʺ) selon au moins une des revendications précédentes, dans lequel la zone d'appui (10, 10', 10", 10‴, 10ʺʺ) présente plusieurs rehaussements périphériques de forme annulaire (15).

6. Dispositif de fixation de roue (1, 1', 1", 1‴, 1ʺʺ) selon au moins une des revendications précédentes, dans lequel la zone d'appui (10, 10', 10", 10‴, 10ʺʺ) présente plusieurs rehaussements (16) s'étendant parallèlement à l'axe longitudinal (6"") du dispositif de fixation de roue (1, 1', 1ʺ, 1‴, 1ʺʺ).

7. Utilisation d'un dispositif de fixation de roue (1, 1', 1", 1‴, 1ʺʺ) selon au moins une des revendications précédentes pour la fixation d'une roue de véhicule (7) à un roulement de roue (9) et/ou un disque de frein (8).
